# EUROPEAN PATENT APPLICATION

(11) **EP 4 382 573 A1**
(43) Date of publication of application: **12.06.2024**
(21) Application number: 22852867.5
(22) Date of filing: 22.07.2022
(51) Int. Cl.: C08L 83/07, C08K 5/524

(54) **PLATINUM-PHOSPHITE ESTER COMPLEX-CONTAINING HYDROSILYLATION CATALYST, METHOD FOR PREPARING SAME, METHOD FOR INHIBITING CRYSTALLIZATION OF PLATINUM-PHOSPHITE ESTER COMPLEX-CONTAINING HYDROSILYLATION CATALYST, AND CURABLE ORGANOPOLYSILOXANE COMPOSITION AND ARTICLE**

(30) Priority: 02.08.2021 JP 2021126648
(71) Applicant: SHIN-ETSU CHEMICAL CO., LTD., Tokyo 1000005 (JP)
(72) Inventor: ARAKI, Tadashi, Annaka-shi, Gunma 379-0224 (JP)
(74) Representative: Mewburn Ellis LLP
(86) International application number: PCT/JP2022/028469
(87) International publication number: WO 2023/013443

(57) **Abstract**

A platinum-phosphite ester complex-containing hydrosilylation catalyst has good storage stability and comprises: a platinum-phosphite ester complex composed of platinum and a phosphite ester compound having a specific structure; and a liquid alkenyl group-containing siloxane compound containing an organopolysiloxane compound having two or more adjacent alkenyl groups, the catalyst being free of a hydrocarbon-based organic solvent and being liquid at 23°e. By using the catalyst, a one-component (one-part) curable organopolysiloxane composition free of a hydrocarbon-based organic solvent can be easily obtained, and the resulting one-component curable organopolysiloxane composition has stable characteristics and physical properties even when exposed to ambient temperature for a long period of time.

## Description

### TECHNICAL FIELD

This invention relates to a platinum-phosphite ester complex-containing hydrosilation catalyst, a method for preparing the hydrosilation catalyst, a method for retarding the hydrosilation catalyst from crystallization, a curable organopolysiloxane composition comprising the hydrosilation catalyst, and an article comprising a cured product of the composition.

### BACKGROUND ART

As used herein, the term "addition curable silicone composition" is defined such that a cured product obtained by curing the composition may be either a cured rubber product or elastomer such as silicone rubber, or a cured gel product (low stress non-elastomer exhibiting no effective rubber hardness) such as silicone gel, with no limits imposed on the cured hardness. Addition curable silicone compositions, specifically addition curable organopolysiloxane compositions, are prepared as millable (gum-like) or liquid addition reaction curable organopolysiloxane compositions comprising an organopolysiloxane having a silicon-bonded alkenyl group (e.g., vinyl group) as a main component or base polymer, an organohydrogenpolysiloxane having a silicon-bonded hydrogen atom (i.e., SiH group) as a curing or crosslinking agent, and a platinum-based catalyst as a curing catalyst wherein addition reaction of the silicon-bonded hydrogen to the alkenyl group takes place to form cured products. Silicone cured products such as silicone rubber and silicone gel which are cured by heating the addition curable silicone compositions are used in a wide variety of applications including electric and electronic parts, optical members, building metmbers, and vehicle sealing members because they have excellent properties including heat resistance, weather resistance, oil resistance, freeze resistance, and electric insulation.

Since addition curable silicone compositions are cured into silicone cured products by heating, some problems arise, for example, such compositions of one pack type undergo state changes like viscosity buildup and gelation when exposed to high temperature, and silicone cured products obtained after curing undergo changes of physical properties. Several solutions are taken to avoid these problems, for example, the silicone compositions are divided into two or more parts which are mixed immediately before use (silicone compositions of mix type), or one-pack silicone compositions are transported in refrigerated or frozen state. In the former case, there is a concern that silicone cured products show changes of physical properties due to fluctuations of formulation and mixing. This suggests a need for very high precision formulation and mixing techniques. These materials are not universal. In the latter case, refrigerated or frozen conditions are necessary from storage to use, requiring very high costs for storage and transportation. These materials are commercially disadvantageous. Under the circumstances, the demand for one-pack addition curable silicone compositions which maintain states and properties unchanged during long-term storage at normal temperature (23±15°C) is now increasing.

Under the circumstances, Patent Document 1: JP 2849027 discloses to add an amine compound of ethylenediamine structure. In this patent document, however, there arises the problem that the addition of an amine compound causes electronic substrates to corrode and to degrade their electric properties. Patent Document 2: JP 4530147 proposes to use a catalyst obtained by heating and aging a specific phosphite ester compound and a platinum catalyst. In this patent document, however, the catalyst obtained by heat aging has unstable activity and because of the combined use of an organic peroxide, the catalyst is limited in handling and undergoes a viscosity buildup and gelation when exposed at normal temperature for a long time. For stable performance, low-temperature conditions are essential during storage and transportation.

Overseas, Patent Document 3: EP 2050768 A1 and Patent Document 4: USP 6,706,840 propose the use of platinum-phosphorous acid complexes. In these two patent documents, however, the catalysts undergo a viscosity buildup and gelation when exposed at normal temperature for a long time. For stable performance, low-temperature conditions are essential during storage and transportation.

Patent Document 5: USP 4,256,616 discloses the use of a platinum-phosphorous acid complex and a tin salt. The tin compound used therein gives rise to a concern of being harmful to the human body. The catalyst undergoes a viscosity buildup and gelation when exposed at normal temperature for a long time. For stable performance, low-temperature conditions are essential during storage and transportation.

Patent Document 6: USP 4,329,275 proposes the use of a platinum catalyst, a phosphorus compound, and an organic peroxide free of a hydroperoxide group. The composition disclosed therein also undergoes a viscosity buildup and gelation when exposed at normal temperature for a long time. For stable performance, low-temperature conditions are essential during storage and transportation.

Recently, Patent Document 7: German Patent Application Publication 60316102 T2 describes a one-pack organopolysiloxane gel composition comprising a platinum catalyst, a phosphite triester, and an organic peroxide. Mentioned as the phosphite triester is tris(2,4-di-tert-butylphenyl) phosphite. The method is such that the organic peroxide is present in an amount of at least 2 equivalents based on the phosphite triester. Also, Patent Document 8: JP-A 2018-503709 proposes the use of tris(2,4-di-tert-butylphenyl) phosphite. In these methods, however, hydrocarbon based organic solvents which impose a heavy environmental load, such as xylene are used to dissolve tris(2,4-di-tert-butylphenyl) phosphite, which gives rise to the problem that the resulting silicone compositions contain the hydrocarbon based organic solvents.

More recently, Patent Document 9: WO 2021/014970 and Patent Document 10: JP-A 2021-042323 propose a method of enhancing the storage stability of a silicone composition using a specific phosphite ester. Although this proposal is successful in dramatically enhancing the storage stability, the silicone composition must be exposed to a high temperature of about 150°C before a fully cured silicone product can be obtained. The silicone composition sometimes lacks storage stability in air because the phosphite ester compound is highly hydrolyzable.

Therefore, there is the desire to have a platinum-phosphite ester complex-containing hydrosilation catalyst which is liquid at 23°C and free of hydrocarbon-based organic solvents. If such a catalyst is obtained, a one-pack addition curable silicone composition which is free of hydrocarbon-based organic solvents (imposing a heavy environmental load) and stable in state and properties can be formulated. There is the increasing demand for a platinum-phosphite ester complex-containing hydrosilation catalyst which is liquid at 23°C and free of hydrocarbon-based organic solvents.

### PRIOR ART DOCUMENTS

### PATENT DOCUMENTS

Patent Document 1: JP 2849027
Patent Document 2: JP 4530147
Patent Document 3: EP 2050768 A1
Patent Document 4: USP 6,706,840
Patent Document 5: USP 4,256,616
Patent Document 6: USP 4,329,275
Patent Document 7: DE 60316102 T2
Patent Document 8: JP-A 2018-503709
Patent Document 9: WO 2021/014970
Patent Document 10: JP-A 2021-042323

### SUMMARY OF INVENTION

### TECHNICAL PROBLEM

An object of the invention, which has been made to solve the outstanding problems, is to provide a platinum-phosphite ester complex-containing hydrosilation catalyst which is liquid at 23°C despite of being free of hydrocarbon-based organic solvents imposing a heavy environmental load, and has high storage stability; a method of preparing the catalyst; a method of retarding the catalyst from crystallization; a curable organopolysiloxane composition comprising the catalyst which is free of hydrocarbon-based organic solvents and remains stable in state and properties when exposed at normal temperature (23±15°C) for a long period of time; and an article comprising a cured product of the organopolysiloxane composition.

### SOLUTION TO PROBLEM

Making extensive investigations to attain the above object, the inventor has found that by dissolving a phosphite ester compound having the general formula (1): 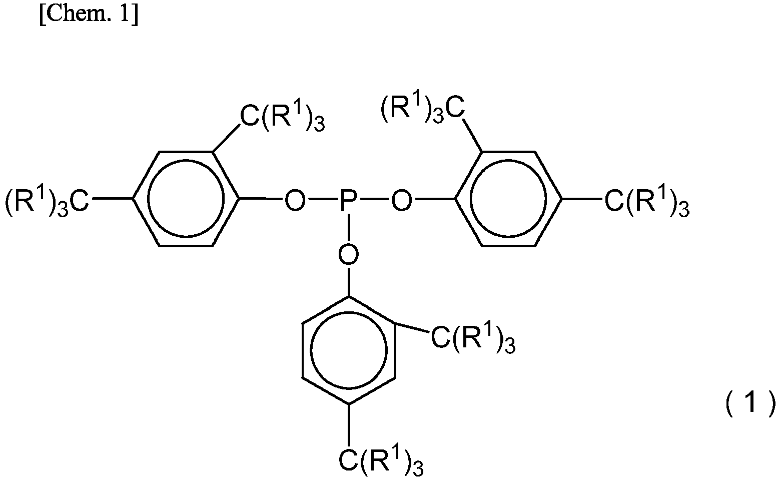 wherein R¹ is independently hydrogen or a C₁-C₃ monovalent aliphatic hydrocarbon group, in a hydrocarbon-based organic solvent having a boiling point of up to 80°C to form a solution, adding a platinum catalyst to the solution, the platinum catalyst being selected from one or more platinum-alkenyl-containing siloxane complexes formed from platinum chloride, chloroplatinic acid, and chloroplatinic acid or chloroplatinic acid salt, and an alkenyl-containing siloxane, and being free of hydrocarbon-based organic solvents, dispersing and dissolving the platinum catalyst and the solution to form a solution containing a platinum-phosphite ester complex composed of platinum and the phosphite ester compound having formula (1), adding an organopolysiloxane compound comprising units having the general formula (2): 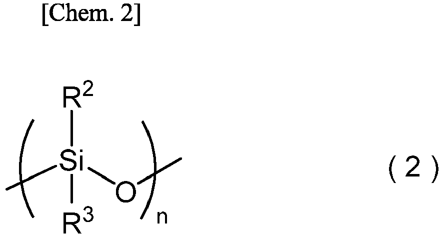 wherein R² is a C₂-C₁₀ alkenyl group, R³ is a C₁-C₁₀ monovalent aliphatic hydrocarbon group, and n is an integer of 2 to 200, to the solution, dispersing and dissolving the organopolysiloxane compound and the solution to form a solution containing an associated compound of at least part of the platinum-phosphite ester complex with the siloxane compound having formula (2), and removing the hydrocarbon-based organic solvent having a boiling point of up to 80°C from the solution, there is obtained a desired platinum-phosphite ester complex-containing hydrosilation catalyst which is a stable liquid during long-term storage at 23°C despite of being free of hydrocarbon-based organic solvents.

Also, using the platinum-phosphite ester complex-containing hydrosilation catalyst, there is obtained a one-pack (or one-component) curable organopolysiloxane composition which is free of hydrocarbon-based organic solvents. The resulting one-pack curable organopolysiloxane composition is stable in state and physical properties even when exposed at normal temperature for a long time. The invention is predicated on this finding.

Accordingly, the invention provides a platinum-phosphite ester complex-containing hydrosilation catalyst, a method for preparing the hydrosilation catalyst, a method for retarding the hydrosilation catalyst from crystallization, a curable organopolysiloxane composition comprising the hydrosilation catalyst, and an article comprising a cured product of the composition, as defined below.
[1] A platinum-phosphite ester complex-containing hydrosilation catalyst comprising
   a platinum-phosphite ester complex composed of platinum and a phosphite ester compound having the general formula (1): 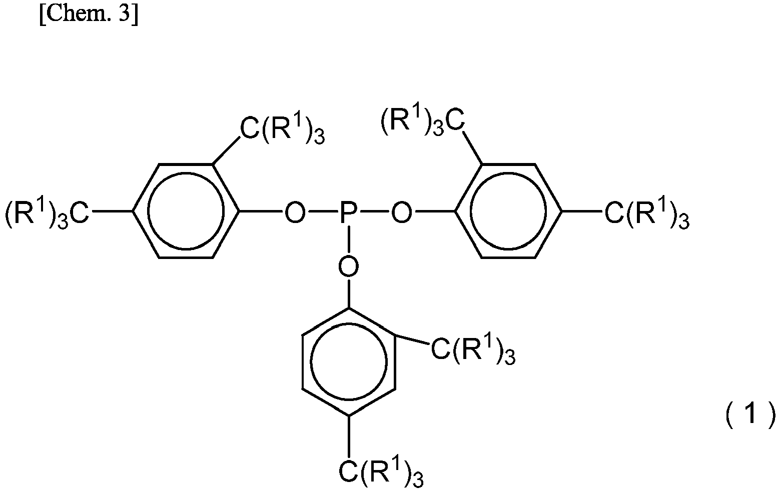 wherein R¹ is independently hydrogen or a C₁-C₃ monovalent aliphatic hydrocarbon group, and
   a liquid alkenyl-containing siloxane compound containing an organopolysiloxane compound comprising units having the general formula (2): 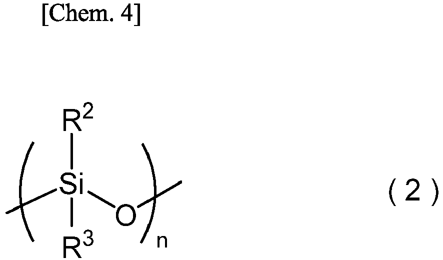 wherein R² is a C₂-C₁₀ alkenyl group, R³ is a C₁-C₁₀ monovalent aliphatic hydrocarbon group, and n is an integer of 2 to 200,
   the catalyst being free of hydrocarbon-based organic solvents and being liquid at 23°C.
[2] The hydrosilation catalyst of [1] wherein the organopolysiloxane compound comprising units of formula (2) is a cyclic organopolysiloxane compound.
[3] The hydrosilation catalyst of [1] or [2] wherein at least part of the platinum-phosphite ester complex is associated with the organopolysiloxane compound comprising units of formula (2).
[4] The hydrosilation catalyst of [3] wherein 0.01 to 100 mol% of the platinum-phosphite ester complex is associated with the organopolysiloxane compound comprising units of formula (2).
[5] The hydrosilation catalyst of any one of [1] to [4] wherein the alkenyl-containing siloxane compound further contains 1,3-divinyl-1,1,3,3-tetramethyldisiloxane and/or 1, 5-divinyl-1,1, 3 , 3, 5, 5-hexamethyltrisiloxane.
[6] A curable organopolysiloxane composition comprising the platinum-phosphite ester complex-containing hydrosilation catalyst of any one of [1] to [5].
[7] The curable organopolysiloxane composition of [6] which is free of hydrocarbon-based organic solvents.
[8] An article comprising a cured product of the curable organopolysiloxane composition of [6] or [7].
[9] A method for preparing a platinum-phosphite ester complex-containing hydrosilation catalyst comprising the steps (a) to (d):
   (a) dissolving a phosphite ester compound having the general formula (1): 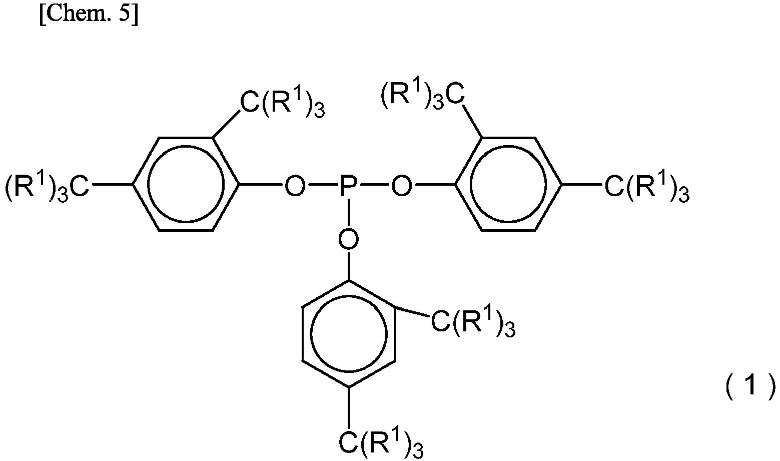 wherein R¹ is independently hydrogen or a C₁-C₃ monovalent aliphatic hydrocarbon group, in a hydrocarbon-based organic solvent having a boiling point of up to 80°C to form a solution,
   (b) adding a platinum catalyst to the solution, the platinum catalyst being selected from one or more platinum-alkenyl-containing siloxane complexes formed from platinum chloride, chloroplatinic acid, and chloroplatinic acid or chloroplatinic acid salt, and an alkenyl-containing siloxane, and being free of hydrocarbon-based organic solvents, dispersing and dissolving the platinum catalyst and the solution to form a solution containing a platinum-phosphite ester complex composed of platinum and the phosphite ester compound having formula (1),
   (c) adding an organopolysiloxane compound comprising units having the general formula (2): 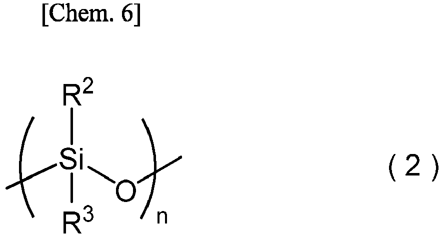 wherein R² is a C₂-C₁₀ alkenyl group, R³ is a C₁-C₁₀ monovalent aliphatic hydrocarbon group, and n is an integer of 2 to 200, to the solution of step (b), dispersing and dissolving the organopolysiloxane compound and the solution to form a solution containing an associated compound of at least part of the platinum-phosphite ester complex with the organopolysiloxane compound comprising units of formula (2), and
   (d) removing the hydrocarbon-based organic solvent from the solution of step (c).
[10] A method for preparing a platinum-phosphite ester complex-containing hydrosilation catalyst according to [9] wherein 0.01 to 500 moles of the organopolysiloxane compound comprising units of formula (2) is added per mole of platinum atom in the platinum-phosphite ester complex.
[11] A method for retarding a platinum-phosphite ester complex-containing hydrosilation catalyst from crystallization, the method comprising the steps (a) to (d):
   (a) dissolving a phosphite ester compound having the general formula (1): 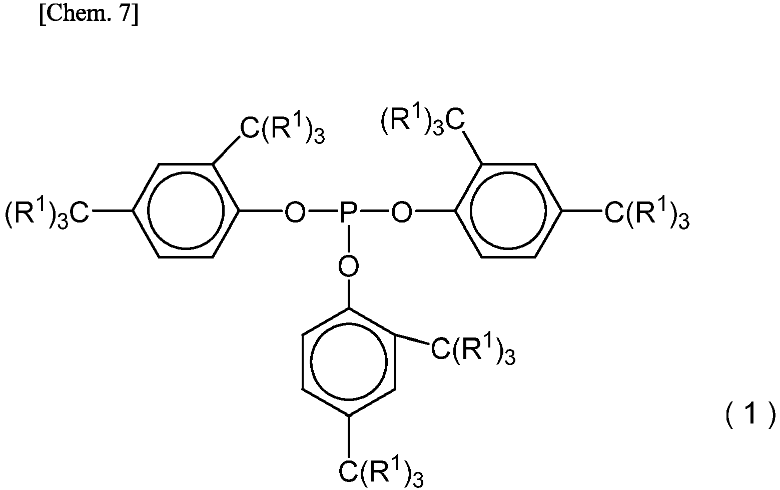 wherein R¹ is independently hydrogen or a C₁-C₃ monovalent aliphatic hydrocarbon group, in a hydrocarbon-based organic solvent having a boiling point of up to 80°C to form a solution,
   (b) adding a platinum catalyst to the solution, the platinum catalyst being selected from one or more platinum-alkenyl-containing siloxane complexes formed from platinum chloride, chloroplatinic acid, and chloroplatinic acid or chloroplatinic acid salt, and an alkenyl-containing siloxane, and being free of hydrocarbon-based organic solvents, dispersing and dissolving the platinum catalyst and the solution to form a solution containing a platinum-phosphite ester complex composed of platinum and the phosphite ester compound having formula (1),
   (c) adding an organopolysiloxane compound comprising units having the general formula (2): 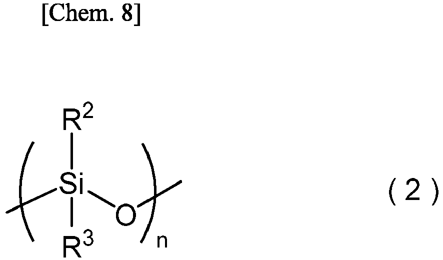 wherein R² is a C₂-C₁₀ alkenyl group, R³ is a C₁-C₁₀ monovalent aliphatic hydrocarbon group, and n is an integer of 2 to 200, to the solution of step (b), dispersing and dissolving the organopolysiloxane compound and the solution to form a solution containing an associated compound of at least part of the platinum-phosphite ester complex with the organopolysiloxane compound comprising units of formula (2), and
   (d) removing the hydrocarbon-based organic solvent from the solution of step (c).
[12] A method for retarding a platinum-phosphite ester complex-containing hydrosilation catalyst from crystallization according to [11] wherein 0.01 to 500 moles of the organopolysiloxane compound comprising units of formula (2) is added per mole of platinum atom in the platinum-phosphite ester complex.

### ADVANTAGEOUS EFFECTS OF INVENTION

The platinum-phosphite ester complex-containing hydrosilation catalyst of the invention is a stable liquid during long-term storage at 23°C despite of being free of hydrocarbon-based organic solvents. The catalyst itself has excellent state stability. When the catalyst is blended in a one-pack (or one-component) curable organopolysiloxane composition, it can be readily and uniformly dispersed to formulate a curable organopolysiloxane composition free of hydrocarbon-based organic solvents. The resulting one-pack curable organopolysiloxane composition free of hydrocarbon-based organic solvents affords a composition which is stable in state and physical properties even when exposed at normal temperature (23±15°C) for a long time. Since no hydrocarbon-based organic solvents are contained, a cured product which is quite safe is obtainable.

### DESCRIPTION OF EMBODIMENTS

### [Platinum-phosphite ester complex-containing hydrosilation catalyst]

One embodiment of the invention is a platinum-phosphite ester complex-containing hydrosilation catalyst comprising a platinum-phosphite ester complex composed of platinum and a phosphite ester compound having the general formula (1): 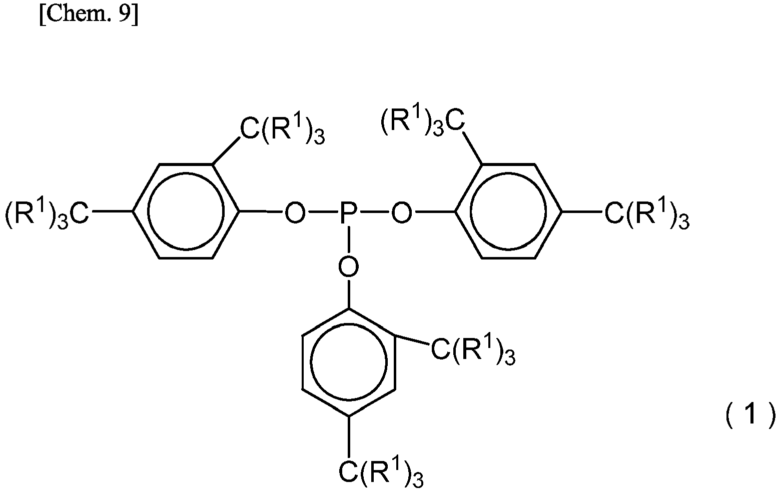 wherein R¹ is independently hydrogen or a C₁-C₃ monovalent aliphatic hydrocarbon group, and a liquid alkenyl-containing siloxane compound containing an organopolysiloxane compound comprising units having the general formula (2): 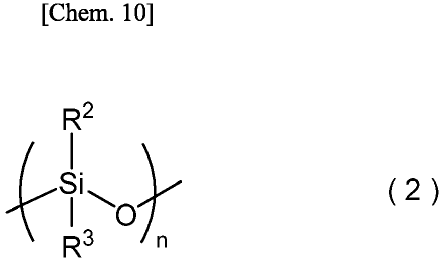 wherein R² is a C₂-C₁₀ alkenyl group, R³ is a C₁-C₁₀ monovalent aliphatic hydrocarbon group, and n is an integer of 2 to 200, the catalyst being free of hydrocarbon-based organic solvents and being liquid at 23°C.

As used herein, "liquid at 23°C" indicates the state that the platinum-phosphite ester complex in the platinum-phosphiplatinum-phosphite ester complex-containing hydrosilation catalyst is not crystallized.

The platinum-phosphite ester complex-containing hydrosilation catalyst is preferably such that at least part of the platinum-phosphite ester complex is associated with the organopolysiloxane compound comprising units of formula (2), specifically 0.01 to 100 mol%, especially 0.02 to 100 mol% of the platinum-phosphite ester complex is associated with the organopolysiloxane compound comprising units of formula (2). If the association rate is less than 0.01 mol%, the platinum-phosphite ester complex in the platinum-phosphite ester complex-containing hydrosilation catalyst will crystallize and turn white turbid during long-term storage. It is believed that the platinum-phosphite ester complex and the organopolysiloxane compound comprising units of formula (2) form readily and quantitatively an associated compound corresponding to a mixing ratio when the platinum-phosphite ester complex is dispersed and dissolved in the organopolysiloxane compound in liberated (or liquid) state and contacted with the organopolysiloxane compound. The presence of the associated compound retards the platinum-phosphite ester complex from crystallization (see Examples 1, 2 and 3 and Comparative Example 2 below).

In contrast, it is believed that alkenyl-containing siloxane compounds other than the organopolysiloxane compound comprising units of formula (2) do not effectively form an associated compound even when contacted with the platinum-phosphite ester complex (see Comparative Examples 1 and 2 below).

### <Platinum-phosphite ester complex>

The platinum-phosphite ester complex in the platinum-phosphite ester complex-containing hydrosilation catalyst is composed of platinum and a phosphite ester compound having the general formula (1).

### [Phosphite ester compound]

In the platinum-phosphite ester complex-containing hydrosilation catalyst, the phosphite ester compound having formula (1) contained as the platinum-phosphite ester complex is an essential component in that it forms a complex (i.e., platinum-phosphite ester complex) with platinum, which achieves a significant improvement in the storage stability of state and physical properties of a curable organopolysiloxane composition containing the catalyst. 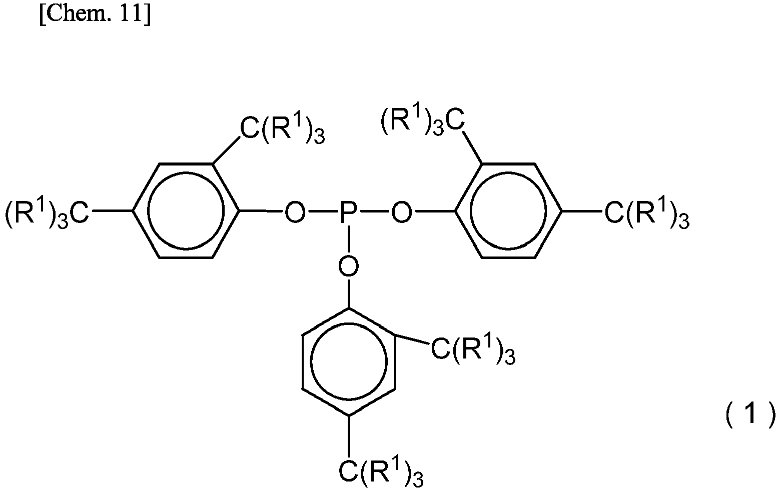 Herein R¹ is independently hydrogen or a C₁-C₃ monovalent aliphatic hydrocarbon group.

In formula (1), R¹ is independently hydrogen or a monovalent aliphatic hydrocarbon group of 1 to 3 carbon atoms, preferably a monovalent aliphatic hydrocarbon group of 1 or 2 carbon atoms, more preferably a monovalent aliphatic hydrocarbon group of one carbon atom, i.e., methyl.

Examples of the phosphite ester compound having formula (1) include phosphite ester compounds wherein R¹ is of the same carbon count such as tris(2,4-dimethylphenyl) phosphite, tris(2,4-di-tert-butylphenyl) phosphite, tris(2,4-bis(3-ethylpentan-3-yl)phenyl) phosphite, and tris(2,4-bis(4-propylheptan-4-yl)phenyl) phosphite; and phosphite ester compounds wherein R¹ is of different carbon counts such as tris(4-(tert-butyl)-2-methylphenyl) phosphite, tris(4-(tert-butyl)-2-ethylphenyl) phosphite, tris(2-(tert-butyl)-4-(3-ethylpentan-3-yl)phenyl)phosphite, and tris(2-(tert-butyl)-4-(3-methylhexan-3-yl)phenyl) phosphite. Of these, tris(2,4-di-tert-butylphenyl) phosphite which is readily available and effective for storage stability is preferred.

In the platinum-phosphite ester complex, the phosphite ester compound having formula (1) is preferably present in an amount of more than 0.6 mole to 1.9 moles, more preferably 0.8 to 1.5 moles per mole of platinum. If the amount of the phosphite ester compound is not more than 0.6 mole, there is a possibility that a curable organopolysiloxane composition having the resulting platinum-phosphite ester complex-containing hydrosilation catalyst loses storage stability or gels. If the amount of the phosphite ester compound exceeds 1.9 moles, there is a possibility that the platinum-phosphite ester complex in a platinum-phosphite ester complex-containing hydrosilation catalyst crystallizes at normal temperature (23±15°C, the same holds true, hereinafter) and fails to remain liquid.

### <Alkenyl-containing siloxane compound>

The alkenyl-containing siloxane compound in the platinum-phosphite ester complex-containing hydrosilation catalyst is liquid at 23°C and contains an organopolysiloxane compound comprising units having the general formula (2).

### [Organopolysiloxane compound]

The organopolysiloxane compound comprising units having the general formula (2) in the platinum-phosphite ester complex-containing hydrosilation catalyst is an essential component in that it associates with at least part of the platinum-phosphite ester complex for preventing the platinum-phosphite ester complex in the platinum-phosphite ester complex-containing hydrosilation catalyst from crystallizing at normal temperature.

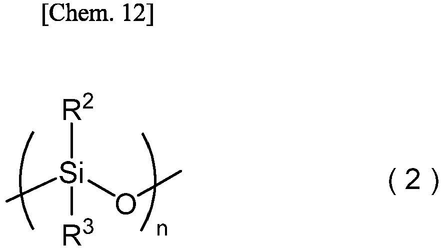

Herein R² is a C₂-C₁₀ alkenyl group, R³ is a C₁-C₁₀ monovalent aliphatic hydrocarbon group, and n is an integer of 2 to 200.

The organopolysiloxane compound comprising difunctional siloxane units of formula (2) wherein n is at least 2 (that is, having at least two difunctional siloxane units: [(R²)(R³)SiO_{2/2}]) is an organopolysiloxane having per molecule at least 2 alkenyl groups, typically vinyl groups (sometimes referred to as adjacent vinyl or alkenyl groups, hereinafter), each bonded to a silicon atom (sometimes referred to as adjacent silicon atom, hereinafter) at a non-terminal position of the molecular chain (or midway the molecular chain), contained in difunctional siloxane units which adjoin each other via an ethereal oxygen atom to form a siloxane linkage (Si-O-Si).

It is noted that the organopolysiloxane compound comprising units of formula (2) is preferably composed solely of units of formula (2) except the units (that is, triorganosiloxy units or diorganohydroxysiloxy units) at ends of the molecular chain.

In formula (2), R² is a C₂-C₁₀ alkenyl group, preferably C₂-C₄ alkenyl group (e.g., vinyl, allyl, propenyl, isopropenyl, butenyl or isobutenyl), more preferably an alkenyl group of two carbon atoms, i.e., vinyl.

In formula (2), R³ is a C₁-C₁₀ monovalent aliphatic hydrocarbon group, preferably C₁-C₄ monovalent saturated aliphatic hydrocarbon group (or alkyl group), more preferably a monovalent saturated aliphatic hydrocarbon group of one carbon atom, i.e., methyl.

In formula (2), n is an integer of 2 to 200, preferably 3 to 100, more preferably 4 to 40, even more preferably 4 to 10.

Although the end of the organopolysiloxane compound comprising difunctional siloxane units of formula (2) is not particularly limited, in case of a linear or branched organopolysiloxane compound, the molecular chain end may be either a silanol-containing siloxy group (diorganohydroxysiloxy group) or a triorganosiloxy group (such as trimethylsiloxy or dimethylvinylsiloxy). When the organopolysiloxane compound is a cyclic organopolysiloxane compound (organocyclopolysiloxane compound), the molecular chain end does not exist.

The organopolysiloxane compound comprising units of formula (2), i.e., at least two adjacent alkenyl groups is a component which associates with the platinum-phosphite ester complex for preventing the platinum-phosphite ester complex from crystallization. Therefore, when the organopolysiloxane compound comprising units of formula (2) is dispersed and mixed in and contacted with the platinum-phosphite ester complex, the organopolysiloxane compound must take a liquid state where individual molecules are liberated.

Examples of the organopolysiloxane compound include organoalkenylcyclopolysiloxanes (herein, organo group means alkyl group) such as 1,3,5,7-tetravinyl-1,3,5,7-tetramethylcyclotetrasiloxane; cyclic polysiloxanes containing adjacent alkenyl groups such as organoalkenylsiloxane-diorganosiloxane cyclic copolymers (same as above); and adjacent alkenyl group-containing siloxane polymers (adjacent alkenyl group-containing linear methylvinylpolysiloxanes) obtained from linear ring-opening polymerization via equilibration reaction of 1,3,5,7-tetravinyl-1,3,5,7-tetramethylcyclotetrasiloxane. Although the end of the adjacent alkenyl group-containing siloxane polymer resulting from linear ring-opening polymerization by equibration reaction (i.e., adjacent alkenyl group-containing linear methylvinylpolysiloxane) is not particularly limited as mentioned above, polymers terminated with a trimethylsiloxy group, silanol-containing siloxy group (dimethylhydroxysiloxy group) or dimethylvinylsiloxy group are preferably used.

The organopolysiloxane compound comprising units of formula (2) is preferably a cyclic organopolysiloxane compound (or organocyclopolysiloxane compound) capable of reducing the viscosity of the platinum-phosphite ester complex-containing hydrosilation catalyst.

The amount of the organopolysiloxane compound comprising units of formula (2) used is preferably 0.01 to 500 moles, more preferably 0.02 to 200 moles, even more preferably 0.03 to 100 moles, most preferably 0.05 to 50 moles per mole of platinum atom in the platinum-phosphite ester complex. If the amount is less than 0.01 mole, the platinum-phosphite ester complex in the platinum-phosphite ester complex-containing hydrosilation catalyst will crystallize at normal temperature, fail to remain liquid, and cause troubles like aggravation of dispersion and a lowering of blending efficiency in formulating the catalyst in the curable organopolysiloxane composition. If the amount exceeds 500 moles, the platinum-phosphite ester complex-containing hydrosilation catalyst itself has so low an effective platinum amount that in preparing a curable organopolysiloxane composition having the catalyst formulated therein, the catalyst must be formulated in a very large amount, and the amount of the organopolysiloxane compound comprising units of formula (2) added increases accordingly, with a possibility to invite troubles such as degraded mechanical properties and a loss of curability.

### [Other alkenyl-containing siloxane compound]

Besides the organopolysiloxane compound comprising units of formula (2) (or adjacent alkenyl-containing organopolysiloxane compound), the alkenyl-containing siloxane compound may contain alkenyl-containing disiloxane compounds such as 1,3-divinyl-1,1,3,3-tetramethyldisiloxane, 1,3-diallyl-1,1,3,3-tetramethyldisiloxane, 1,3-divinyl-1,3-dimethyl-1,3-diphenyldisiloxane, and 1,3-divinyl-1,1,3,3-tetraphenyldisiloxane; alkenyl-terminated trisiloxane compounds such as 1,5-divinyl-1,1,3,3,5,5-hexamethyltrisiloxane. These alkenyl-containing disiloxane compounds and alkenyl-terminated trisiloxane compounds are, for example, alkenyl-containing siloxane compounds which are contained as a ligand to platinum atom in the platinum catalyst used as an intermediate reactant in the preparation of the platinum-phosphite ester complex in the platinum-phosphite ester complex-containing hydrosilation catalyst.

It is noted that in the platinum-phosphite ester complex-containing hydrosilation catalyst, an alkenyl-terminated, siloxy-blocked linear diorganopolysiloxane free of alkenyl groups midway the molecular chain, such as a molecular both end vinyldimethylsiloxy-blocked linear dimethylpolysiloxane, especially an alkenyl-terminated, siloxy-blocked linear diorganopolysiloxane having a degree of polymerization of at least 14 and free of alkenyl groups midway the molecular chain (specifically, alkenyl-terminated silicone oil), which is used merely as a silicone diluent or solvent when a platinum catalyst (e.g., platinum-alkenyl-containing siloxane complex such as Karstedt complex) as an intermediate reactant is used in the form of a catalyst solution such as silicone solution, may be contained in a curable organopolysiloxane composition as a silicone solution of the platinum-phosphite ester complex-containing hydrosilation catalyst because it is not counted as the alkenyl-containing siloxane compound other than the organopolysiloxane compound comprising units of formula (2) (that is, excluded from the components of the inventive platinum-phosphite ester complex-containing hydrosilation catalyst), but does not exert a detrimental effect in the practice of the invention.

The content of the alkenyl-containing siloxane compound other than the organopolysiloxane compound comprising units of formula (2) is preferably 0 to 99.5% by weight, more preferably 0.5 to 98% by weight based on the alkenyl-containing siloxane compound. If the content of the other siloxane compound is too much, the concentration of the organopolysiloxane compound comprising units of formula (2) in the platinum-phosphite ester complex-containing hydrosilation catalyst is too low to effectively promote formation of an associated compound of the platinum-phosphite ester complex with the organopolysiloxane compound comprising units of formula (2), with a risk that the platinum-phosphite ester complex in the platinum-phosphite ester complex-containing hydrosilation catalyst crystallizes and turns white turbid.

### [Preparation of platinum-phosphite ester complex-containing hydrosilation catalyst]

The platinum-phosphite ester complex-containing hydrosilation catalyst can be prepared in a consistent manner by carrying out the following four steps:
step (a) of dissolving a phosphite ester compound having the general formula (1) in a hydrocarbon-based organic solvent having a boiling point of up to 80°C to form a solution,
step (b) of adding a platinum catalyst to the solution, the platinum catalyst being selected from one or more platinum-alkenyl-containing siloxane complexes formed from platinum chloride, chloroplatinic acid, and chloroplatinic acid or chloroplatinic acid salt, and an alkenyl-containing siloxane, and being free of hydrocarbon-based organic solvents, dispersing and dissolving the platinum catalyst and the solution to form a solution containing a platinum-phosphite ester complex composed of platinum and the phosphite ester compound having formula (1),
step (c) of adding an organopolysiloxane compound comprising units having the general formula (2) to the solution of step (b), dispersing and dissolving the organopolysiloxane compound and the solution to form a solution containing an associated compound of at least part of the platinum-phosphite ester complex with the organopolysiloxane compound comprising units of formula (2), and
step (d) of removing the hydrocarbon-based organic solvent from the solution of step (c).

Each step is described below in detail.

### First step: (a)

The first step involves dissolving a phosphite ester compound having the general formula (1) in a hydrocarbon-based organic solvent having a boiling point of up to 80°C to form a solution. 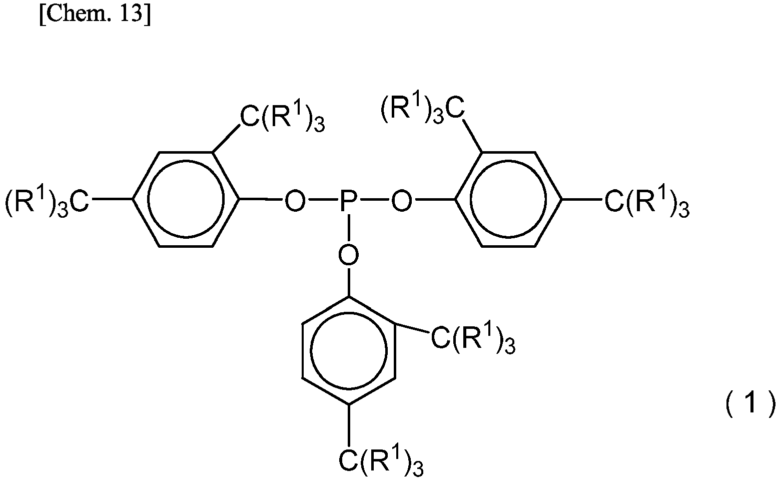 Herein R¹ is independently hydrogen or a C₁-C₃ monovalent aliphatic hydrocarbon group.

Since many of phosphite ester compounds having formula (1) are in a solid state at normal temperature, the first step is essential for rapid formation of a complex with platinum to be added in the next step.

### [Phosphite ester compound]

The phosphite ester compound having formula (1) is as mentioned above. Among others, tris(2,4-di-tert-butylphenyl) phosphite which is readily available and effective for storage stability is preferably used.

### [Hydrocarbon-based organic solvent having a boiling point of up to 80°C]

Since the phosphite ester compound having formula (1) is most often solid at normal temperature, it is necessary that the phosphite ester compound is dissolved in a hydrocarbon-based organic solvent having a boiling point of up to 80°C to form a solution before the second step of mixing the phosphite ester compound with a platinum catalyst to form a platinum-phosphite ester complex. As used herein, the term "hydrocarbon-based organic solvent" means an organic compound based on a hydrocarbon as a basic skeleton which may contain a heteroatom (e.g., oxygen, nitrogen or sulfur atom) in the molecule and which is liquid at normal temperature (23±15°C), with organosilicon compounds such as organosilane compounds and organopolysiloxane compounds being excluded. As used herein, the boiling point is a boiling point under atmospheric pressure.

The hydrocarbon-based organic solvent having a boiling point of up to 80°C may be linear or branched. Examples of the hydrocarbon-based organic solvent having a boiling point of up to 80°C include n-pentane (b.p. 36°C), n-hexane (b.p. 68°C), 2-methylbutane (b.p. 30°C), 2,2-dimethylbutane (b.p. 50°C), 2,3-dimethylbutane (b.p. 58°C), 2-methylpentane (b.p. 62°C), and 3-methylpentane (b.p. 63°C). Inter alia, n-hexane (b.p. 68°C) is preferred because it is relatively easy to handle in industrial use and easy to remove in a later removal step.

The reason why a boiling point of up to 80°C is necessary is that in the step of removing the hydrocarbon-based organic solvent from the platinum-phosphite ester complex-containing hydrosilation catalyst, it is preferable to distill off the hydrocarbon-based organic solvent in vacuum. The hydrocarbon-based organic solvent having a boiling point of up to 80°C can be removed even when the vacuum distill-off temperature is set below 40°C, and the stable platinum-phosphite ester complex-containing hydrosilation catalyst be obtained. If the hydrocarbon-based organic solvent has a boiling point in excess of 80°C, the vacuum distill-off temperature must be set above 40°C before the hydrocarbon-based organic solvent can be completely removed. There is a risk that the hydrocarbon-based organic solvent remains in the platinum-phosphite ester complex-containing hydrosilation catalyst, or the platinum-phosphite ester complex-containing hydrosilation catalyst is decomposed at the temperature of the solvent removal step so that crystals precipitate.

The amount of the hydrocarbon-based organic solvent having a boiling point of up to 80°C used is preferably 100 to 10,000 parts by weight, more preferably 1,000 to 5,000 parts by weight per 100 parts by weight of the phosphite ester compound having formula (1) though not particularly limited.

The temperature at which the phosphite ester compound having formula (1) is dissolved in the hydrocarbon-based organic solvent is preferably in a range of up to 40°C, more preferably 0 to 35°C. If the phosphite ester compound having formula (1) is dissolved at a temperature in excess of 40°C, the phosphite ester compound is more susceptible to hydrolysis with water in the hydrocarbon-based organic solvent with a likelihood that the phosphite ester compound having formula (1) is converted to a phosphate ester compound, and the resulting platinum-phosphite ester complex-containing hydrosilation catalyst becomes low in stability. Also, the dissolving time is not particularly limited as long as the phosphite ester compound having formula (1) is dissolved in the hydrocarbon-based organic solvent. The dissolving time is about 10 minutes to about 24 hours. The vessel for dissolution is preferably selected from vessels which can shield off oxygen.

### Second step: (b)

The second step (b) involves adding a platinum catalyst to the solution of step (a), the platinum catalyst being selected from one or more platinum-alkenyl-containing siloxane complexes formed from platinum chloride, chloroplatinic acid, and chloroplatinic acid or chloroplatinic acid salt, and an alkenyl-containing siloxane, and being free of hydrocarbon-based organic solvents, dispersing and dissolving the platinum catalyst and the solution to form a solution containing a platinum-phosphite ester complex composed of platinum and the phosphite ester compound having formula (1).

### [Platinum catalyst]

The platinum catalyst used as intermediate reactant in the preparation of the inventive platinum-phosphite ester complex-containing hydrosilation catalyst is selected from one or more platinum-alkenyl-containing siloxane complexes formed from platinum chloride, chloroplatinic acid, and chloroplatinic acid or chloroplatinic acid salt, and an alkenyl-containing siloxane, typically vinyl-containing siloxane, and free of hydrocarbon-based organic solvents. The platinum catalyst is a curing catalyst (typically hydrosilating addition reaction catalyst) which itself contributes to hydrosilation reaction between alkenyl groups in a base polymer (typically alkenyl-containing organopolysiloxane) and SiH groups in a crosslinker (typically organohydrogenpolysiloxane) which are typically contained in addition curable silicone compositions.

In the practice of the invention, the platinum-phosphite ester complex-containing hydrosilation catalyst containing the platinum-phosphite ester complex (composed of platinum and the phosphite ester compound having formula (1)) obtained by dispersing and dissolving the platinum catalyst in the solution containing the phosphite ester compound having formula (1) is used in an addition curable silicone composition (typically addition curable organopolysiloxane composition) as a curing catalyst. This is successful in significantly improving the storage stability of state and physical properties of the addition curable organopolysiloxane composition.

In the platinum catalyst as an intermediate reactant, examples of the alkenyl-containing siloxane in the platinum-alkenyl-containing siloxane complex include 1,3-divinyl-1,1,3,3-tetramethyldisiloxane, 1,3-diallyl-1,1,3,3-tetramethyldisiloxane, 1,3-divinyl-1,3-dimethyl-1,3 -diphenyldisiloxane, 1,3-divinyl-1,1,3,3 -tetraphenyldisiloxane, 1,5-divinyl-1,1,3,3,5,5-hexamethyltrisiloxane, 1,3,5-trimethyl-1,3,5-trivinylcyclotrisiloxane, and 1,3,5,7-tetramethyl-1,3,5,7-tetravinylcyclotetrasiloxane. The structure of 1,3-divinyl-1,1,3,3-tetramethyldisiloxane, 1,3,5-trimethyl-1 ,3,5-trivinylcyclotrisiloxane, and 1,3,5,7-tetramethyl-1,3,5,7-tetravinylcyclotetrasiloxane is shown below.

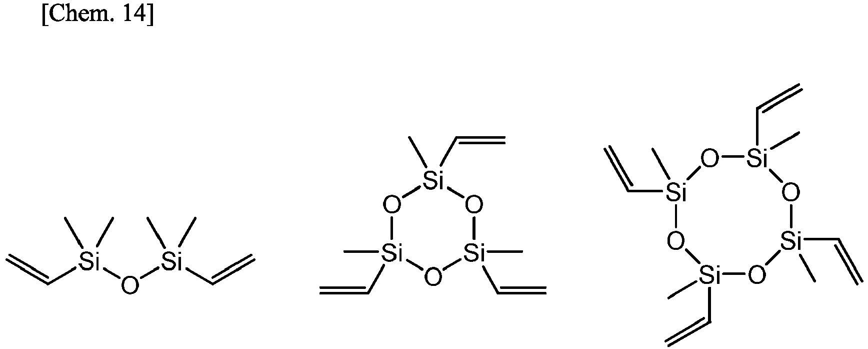

In the platinum catalyst selected from one or more platinum-alkenyl-containing siloxane complexes formed from platinum chloride (PtCl₄), chloroplatinic acid (H₂PtCl₆), and chloroplatinic acid or chloroplatinic acid salt (H₂PtCl₆·6H₂O), and an alkenyl-containing siloxane, typically vinyl-containing siloxane, and free of hydrocarbon-based organic solvents, examples of the platinum-alkenyl-containing siloxane complex include platinum-1,3-divinyl-1,1,3,3-tetramethyldisiloxane complex (Karstedt complex), platinum-1,3-diallyl-1,1,3,3-tetramethyldisiloxane complex, platinum-1,3-divinyl-1,3-dimethyl-1,3-diphenyldisiloxane complex, platinum-1,3,5-trimethyl-1,3,5-trivinylcyclotrisiloxane complex, platinum-1,3-divinyl-1,1,3,3-tetraphenyldisiloxane complex, and platinum-1,3,5,7-tetramethyl-1,3,5,7-tetravinylcyclotetrasiloxane complex. The platinum-alkenyl-containing siloxane complex is preferably at least one complex selected from the above group while it is also essential that the complexes are free of hydrocarbon-based organic solvents. Of the above platinum catalysts, it is most preferred to use platinum-1,3-divinyl-1,1,3,3-tetramethyldisiloxane complex (Karstedt complex).

It is essential that the platinum catalyst mentioned above do not contain ordinary hydrocarbon-based organic solvents including aromatic organic solvents such as toluene and xylene, and alcoholic organic solvents such as ethanol, n-butanol and 2-ethylhexyl alcohol (excluding low molecular weight, vinyl-containing oligo-siloxanes such as tetramethyldivinyldisiloxane, trimethyltrivinylcyclotrisiloxane, and tetramethyltetravinylcyclotetrasiloxane, and linear organopolysiloxanes (so-called silicone oil) such as molecular both end dimethylvinylsiloxy-blocked linear dimethylpolysiloxane, molecular both end trimethylsiloxy-blocked linear dimethylpolysiloxane, and molecular both end trimethylsiloxy-blocked linear methylphenylpolysiloxane) because these organic solvents are suspected to be harmful to the human body.

The platinum catalyst selected from one or more platinum-alkenyl-containing siloxane complexes formed from platinum chloride, chloroplatinic acid, and chloroplatinic acid or chloroplatinic acid salt, and an alkenyl-containing siloxane, and free of hydrocarbon-based organic solvents, desirably takes the form of a silicone solution using an alkenyl-containing organopolysiloxane of the same type as or different type from the alkenyl-containing organopolysiloxane forming a ligand of the platinum-alkenyl-containing siloxane complex (typically, linear organopolysiloxane blocked with vinyldiorganosiloxy groups at both ends of the molecular chain and not containing adjacent alkenyl groups in the molecule, such as linear dimethylpolysiloxane blocked with dimethylvinylsiloxy groups at both ends of the molecular chain) as a diluent or solvent. This silicone solution is typically prepared as a solution having a platinum content of about 0.001 to 0.010 mol%, in order to enhance the stability and ease of handling (or workability) of the platinum-alkenyl-containing siloxane complex. This corresponds to a silicone solution containing platinum in an amount (or weight concentration) of about 0.2 to 2.0% by weight.

The ratio of the platinum catalyst and the phosphite ester compound added is desirably in a range of more than 0.6 molecule to 1.9 molecules, more desirably 0.8 molecule to 1.5 molecules of the phosphite ester compound per platinum atom in the platinum catalyst. If the phosphite ester compound is not more than 0.6 molecule per platinum atom in the platinum catalyst, there is an increased risk that a curable organopolysiloxane composition having formulated therein the resulting platinum-alkenyl-containing siloxane complex-containing hydrosilation catalyst loses storage stability or gels. If the phosphite ester compound exceeds 1.9 molecules per platinum atom in the platinum catalyst, there is an increased risk that the platinum-alkenyl-containing siloxane complex in the resulting platinum-alkenyl-containing siloxane complex-containing hydrosilation catalyst crystallizes and precipitates at normal temperature even when the platinum-phosphite ester complex resulting from second step is associated with the organopolysiloxane compound comprising units of formula (2) in the third step. This invites troubles including a failure to maintain the platinum-phosphite ester complex-containing hydrosilation catalyst liquid at 23°C. Also, when the platinum-phosphite ester complex-containing hydrosilation catalyst is formulated in the curable organopolysiloxane composition, there arise troubles such as aggravated dispersibility and low blending efficiency.

In the second step, the method of adding the platinum catalyst is not particularly limited. The phosphite ester compound solution may be poured all at once, added in divided portions, or added dropwise over a predetermined time.

In the second step, dispersion and dissolution of the platinum catalyst is preferably performed at a temperature of up to 40°C, more preferably 0 to 35°C for at least 30 minutes, more preferably 30 minutes to 4 hours. In the second step, a vessel which can shield off oxygen is preferably selected like the first step. The vessel used in the first step may be used without change.

By dispersing and dissolving under the above-mentioned conditions, the platinum-phosphite ester complex composed of platinum and phosphite ester compound having formula (1) is formed.

### Third step: (c)

The third step is adding an organopolysiloxane compound comprising units having the following general formula (2) (i.e., organopolysiloxane compound having at least two adjacent alkenyl groups) to the solution of step (b), dispersing and dissolving the organopolysiloxane compound and the solution to form a solution containing an associated compound of at least part of the platinum-phosphite ester complex with the organopolysiloxane compound comprising units of formula (2) (i.e., organopolysiloxane compound having at least two adjacent alkenyl groups). 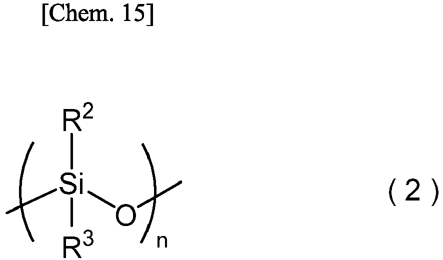 Herein R² is a C₂-C₁₀ alkenyl group, R³ is a C₁-C₁₀ monovalent aliphatic hydrocarbon group, and n is an integer of 2 to 200.

Through association of at least part of the platinum-phosphite ester complex with the organopolysiloxane compound comprising units of formula (2), a platinum-phosphite ester complex-containing hydrosilation catalyst is obtained which is liquid at 23°C despite of being free of hydrocarbon-based organic solvents and has excellent dispersibility and state stability. When the platinum-phosphite ester complex-containing hydrosilation catalyst is used as a curing catalyst in an addition curable silicone composition (or curable organopolysiloxane composition), the silicone composition maintains stable states and physical properties even when exposed at normal temperature for a long time and contains no hydrocarbon-based organic solvents.

Herein, the organopolysiloxane compound comprising units of formula (2) (i.e., organopolysiloxane compound having at least two adjacent alkenyl groups) is as defined above. It is noted that the organopolysiloxane compound comprising units of formula (2) is a component which associates with the platinum-phosphite ester complex to prevent the platinum-phosphite ester complex from crystallization. The organopolysiloxane compound comprising units of formula (2) is different from the alkenyl-containing siloxane, typically vinyl-containing siloxane serving as a ligand to form a complex with platinum atom in the platinum-alkenyl-containing siloxane complex in that the organopolysiloxane compound comprising units of formula (2) is in a liquid state where individual molecules are liberated when the organopolysiloxane compound is dispersed in and mixed with the platinum-phosphite ester complex and contacted with the platinum-phosphite ester complex.

It is noted that in step (b) of preparing the platinum-phosphite ester complex, the alkenyl-containing siloxane serving as a ligand to form a complex with platinum atom in the platinum-alkenyl-containing siloxane complex as an intermediate reactant is dissociated or liberated from the platinum-phosphite ester complex. It is believed that in case the alkenyl-containing siloxane thus liberated is an alkenyl-containing siloxane (e.g., 1,3-divinyl-1,1,3,3-tetramethyldisiloxane serving as a ligand of Karstedt complex) other than the organopolysiloxane compound comprising units of formula (2) (i.e., organopolysiloxane compound having at least two adjacent alkenyl groups), the relevant alkenyl-containing siloxane does not associate with the platinum-phosphite ester complex as mentioned above. On the other hand, it is also believed that in case the liberated alkenyl-containing siloxane corresponds to the organopolysiloxane compound comprising units of formula (2) (i.e., organopolysiloxane compound having at least two adjacent alkenyl groups), the liberated alkenyl-containing siloxane can also form an associated compound with the platinum-phosphite ester complex. From the standpoint of more positively forming an associated compound with the organopolysiloxane compound comprising units of formula (2) (i.e., organopolysiloxane compound having at least two adjacent alkenyl groups) (or from the standpoints of inhibiting crystallization of the platinum-phosphite ester complex and more positively enhancing storage stability), in step (c) after preparation of the platinum-phosphite ester complex, the platinum-phosphite ester complex is mixed and contacted with the organopolysiloxane compound comprising units of formula (2) (i.e., organopolysiloxane compound having at least two adjacent alkenyl groups).

The amount of the organopolysiloxane compound comprising units of formula (2) used is preferably in a range of 0.01 to 500 moles, more preferably 0.02 to 200 moles, even more preferably 0.03 to 100 moles, most preferably 0.05 to 50 moles of the organopolysiloxane compound per mole of platinum atom in the platinum-phosphite ester complex (platinum catalyst used in the second step). If the amount of the organopolysiloxane compound comprising units of formula (2) is less than 0.01 mole per mole of platinum atom in the platinum-phosphite ester complex, the amount of the organopolysiloxane compound comprising units of formula (2) which is available for association per mole of platinum atom is quite small. It is then difficult to maintain the catalyst liquid at 23°C, allowing crystals to precipitate. When the catalyst is formulated in a curable organopolysiloxane composition, there may arise troubles such as aggravated dispersion and low blending workability. If the amount of the organopolysiloxane compound comprising units of formula (2) exceeds 500 moles per mole of platinum atom in the platinum-phosphite ester complex, it has a more influence on the viscosity of the resulting platinum-phosphite ester complex-containing hydrosilation catalyst, giving rise to troubles such as a lowering of workability in blending the catalyst.

In the third step, the method of adding the organopolysiloxane compound comprising units of formula (2) is not particularly limited. The organopolysiloxane compound may be poured all at once to the platinum-phosphite ester complex solution, added in divided portions, or added dropwise over a predetermined time. Since the dropwise addition takes a time, simultaneous pouring or separate addition is preferred.

In the third step, dispersion and dissolution is preferably performed at a temperature of up to 40°C, more preferably 0 to 35°C for at least 60 minutes, more preferably 60 minutes to 24 hours. By dispersing and dissolving under the above-mentioned conditions, the associated compound of at least part of the platinum-phosphite ester complex with the organopolysiloxane compound comprising units of formula (2) is formed. In the third step, a vessel which can shield off oxygen is preferably selected like the first and second steps. The vessel used in the first or second step may be used without change.

By dispersing and dissolving under the above-mentioned conditions, a solution containing the associated compound of at least part of the platinum-phosphite ester complex with the organopolysiloxane compound comprising units of formula (2) is prepared.

### Fourth step: (d)

The fourth step is to remove the hydrocarbon-based organic solvent from the solution of step (c). The fourth step is essential for removing the hydrocarbon-based organic solvent from the solution of steps (a) to (c), obtaining the platinum-phosphite ester complex-containing hydrosilation catalyst free of hydrocarbon-based organic solvents.

The solvent removal method used herein is preferably a vacuum distillation method of distilling off the solvent under reduced pressure using a vacuum pump or the like. This is because a stable platinum-phosphite ester complex-containing hydrosilation catalyst is obtained when the vacuum distillation temperature is set at or below 40°C, preferably 0 to 35°C. The vacuum distillation time is preferably 30 minutes to 4 hours though not particularly limited. While the degree of vacuum varies with the boiling point of the hydrocarbon-based organic solvent, the degree of vacuum is set at or below 50 hPa, preferably 1 to 35 hPa, whereby the hydrocarbon-based organic solvent used can be completely removed.

For confirming whether or not the hydrocarbon-based organic solvent is completely removed, solvent removal can be ascertained by determining the ratio of the weight of the platinum-phosphite ester complex-containing hydrosilation catalyst obtained at the end of the fourth step to the total weight of the phosphite ester compound, platinum catalyst and siloxane compound used. If the weight of the platinum-phosphite ester complex-containing hydrosilation catalyst obtained is more than the total weight of the phosphite ester compound, platinum catalyst and siloxane compound used, suggesting that the hydrocarbon-based organic solvent remains, the time of the fourth step is prolonged until the hydrocarbon-based organic solvent is completely removed.

### [Method for retarding platinum-phosphite ester complex-containing hydrosilation catalyst from crystallization]

The platinum-phosphite ester complex-containing hydrosilation catalyst defined above can be retarded from crystallization by carrying out the following four steps:
(a) dissolving a phosphite ester compound having the general formula (1) in a hydrocarbon-based organic solvent having a boiling point of up to 80°C to form a solution,
(b) adding a platinum catalyst to the solution, the platinum catalyst being selected from one or more platinum-alkenyl-containing siloxane complexes formed from platinum chloride, chloroplatinic acid, and chloroplatinic acid or chloroplatinic acid salt, and an alkenyl-containing siloxane, and being free of hydrocarbon-based organic solvents, dispersing and dissolving the platinum catalyst and the solution to form a solution containing a platinum-phosphite ester complex composed of platinum and the phosphite ester compound having formula (1),
(c) adding an organopolysiloxane compound comprising units having the general formula (2) to the solution of step (b), dispersing and dissolving the organopolysiloxane compound and the solution to form a solution containing an associated compound of at least part of the platinum-phosphite ester complex with the organopolysiloxane compound comprising units of formula (2), and
(d) removing the hydrocarbon-based organic solvent from the solution of step (c).

The four steps for retarding crystallization are the same as the four steps involved in the method for preparing a platinum-phosphite ester complex-containing hydrosilation catalyst.

The method including the four steps is successful in retarding the platinum-phosphite ester complex-containing hydrosilation catalyst from crystallization.

### [Curable organopolysiloxane composition comprising platinum-phosphite ester complex-containing hydrosilation catalyst]

The platinum-phosphite ester complex-containing hydrosilation catalyst may be used as a curing catalyst or cleaning catalyst for a variety of resins. The catalyst exerts its characteristics to a full extent particularly when used as a curing catalyst in curable organopolysiloxane compositions of one-pack (or one-component) type and addition reaction cure type which are cured into silicone resins (e.g., silicone rubber or silicone gel) through hydrosilation reaction, for example, millable (gum-like) or liquid addition curable silicone rubber compositions or addition curable silicone gel compositions. Preferably the curable organopolysiloxane compositions are free of hydrocarbon-based organic solvents.

The reason is described below. (1) On heating, the inventive catalyst has a substantially equivalent curability (i.e., catalyst activity to hydrosilation addition reaction) to a commonly used platinum catalyst which is selected from one or more platinum-alkenyl-containing siloxane complexes formed from platinum chloride, chloroplatinic acid, and chloroplatinic acid or chloroplatinic acid salt, and an alkenyl-containing siloxane. (2) During storage at normal temperature, the inventive catalyst exhibits a poor catalyst activity (or excellent storage stability) and a very slow progress of hydrosilation reaction because the phosphite ester compound forms a complex (i.e., platinum- phosphite ester compound complex) with platinum. Then the curable organopolysiloxane composition maintains stable states and physical properties even when exposed at normal temperature for a long time. (3) Since the platinum-phosphite ester complex is associated with the organopolysiloxane compound comprising units of formula (2) (i.e., organopolysiloxane compound having at least two adjacent alkenyl groups), the platinum-phosphite ester complex-containing hydrosilation catalyst maintains a liquid state at 23°C. Therefore, when the platinum-phosphite ester complex-containing hydrosilation catalyst is used in curable organopolysiloxane compositions, there are obtained advantages including ease of working and efficient uniform dispersion.

The curable organopolysiloxane composition (for example, addition curable silicone rubber composition or addition curable silicone gel composition) used herein is most preferably a millable (gum-like) or liquid one-pack addition curable organopolysiloxane composition comprising the following basic components: an alkenyl-containing organopolysiloxane, typically molecular both end vinyldimethylsiloxy-blocked linear dimethylpolysiloxane as a major component or base polymer, an organohydrogenpolysiloxane having at least two silicon-bonded hydrogen atoms (i.e., SiH groups) per molecule as a curing or crosslinking agent, and a hydrosilation addition reaction catalyst, wherein the composition cures through hydrosilation reaction between alkenyl groups in the alkenyl-containing organopolysiloxane (as base polymer) and silicon-bonded hydrogen atoms (i.e., SiH groups) in the organohydrogenpolysiloxane (as crosslinker) into a silicone rubber elastomer (or rubber cured product) or silicone gel cured product.

The amount of the platinum-phosphite ester complex-containing hydrosilation catalyst blended in the curable organopolysiloxane composition is preferably about 0.1 to 1,000 ppm, more preferably about 1 to 500 ppm, even more preferably about 5 to 300 ppm of platinum atom in the platinum-phosphite ester complex-containing hydrosilation catalyst based on the overall weight of the composition. When the platinum-phosphite ester complex-containing hydrosilation catalyst is used in the form of a catalyst solution such as silicone solution in a solvent other than the hydrocarbon-based organic solvent, typically alkenyl-terminated organopolysiloxane (or alkenyl-terminated silicone oil), for example, the solution containing the platinum-phosphite ester complex-containing hydrosilation catalyst is a catalyst solution having a concentration of 1 wt% of platinum atom, the amount of the catalyst solution blended is preferably 0.001 to 10 parts by weight, more preferably 0.01 to 5 parts by weight, even more preferably 0.05 to 3 parts by weight per 100 parts by weight of the alkenyl-containing organopolysiloxane (as base polymer). If the amount of the platinum-phosphite ester complex-containing hydrosilation catalyst solution (1 wt% platinum atom) blended is less than 0.001 part by weight (or if the weight of platinum atom is less than 0.1 ppm based on the overall weight of the composition), there is a possibility that the resulting curable organopolysiloxane composition may cure into a cured product having a poor strength or an under-cured product. Inversely, if the amount of the platinum-phosphite ester complex-containing hydrosilation catalyst solution (1 wt% platinum atom) blended is more than 10 parts by weight (or if the weight of platinum atom is more than 1,000 ppm), the resulting curable organopolysiloxane composition may be colored or cure within a short time, and is disadvantageous in cost. The catalyst activity or curability can be adjusted by increasing or decreasing the concentration of the platinum-phosphite ester complex-containing hydrosilation catalyst added.

In the organopolysiloxane composition of addition reaction type having the platinum-phosphite ester complex-containing hydrosilation catalyst formulated therein, any additives may be blended as optional components, for example, fillers including inorganic fillers which are untreated or have been treated to be surface hydrophobic, for example, reinforcing inorganic fillers such as fumed silica (dry silica), precipitated silica (wet silica), sol-gel method silica, fused silica, ground silica, and crystalline silica (powdered silica), non-reinforcing inorganic fillers such as calcium silicate, titanium dioxide, ferric oxide and carbon black, or organic resin balloons; tackifiers such as silane coupling agents, e.g., hydrolyzable organosilane compounds (such as alkoxysilanes) containing a monovalent hydrocarbon group having a functional group (e.g., epoxy, acryloxy, methacryloxy, or mercapto group) containing a heteroatom selected from oxygen, nitrogen and sulfur and/or partial hydrolytic condensates thereof; plasticizers such as so-called non-functional silicone oils which are free of functional groups participating in hydrosilation addition reaction, such as alkenyl groups and hydrosilyl (SiH) groups in the molecule, for example, molecular both end trimethylsilyl-blocked dimethylpolysiloxane (dimethylsilicone oil), molecular both end trimethylsilyl-blocked dimethylsiloxane-diphenylsiloxane copolymers, molecular both end trimethylsilyl-blocked dimethylsiloxane-methylphenylsiloxane copolymers (methylphenylsilicone oil); dispersants (or wetters), addition reaction inhibitors, pigment paste, and reinforcing silicone resins.

As to the conditions for curing the curable organopolysiloxane composition having the platinum-phosphite ester complex-containing hydrosilation catalyst formulated therein, the composition is preferably heated to promote cure. For example, the heating temperature is preferably about 80 to 200°C, more preferably about 90 to 150°C. The curing time is preferably about 5 to 240 minutes, more preferably about 10 to 120 minutes though not particularly limited.

### [Article comprising a cured product of the curable organopolysiloxane composition containing the platinum-phosphite ester complex-containing hydrosilation catalyst]

The curable organopolysiloxane composition containing the platinum-phosphite ester complex-containing hydrosilation catalyst can find use in articles using it as a potting material to electric or electronic instruments and IGBT; adhesive-applied articles used in various electronic substrates or resin cases; rubber contacts used in remote controllers, type writers, word processors, computer terminals, and musical instruments; building gaskets; various rolls such as copier rolls, development rolls, transfer rolls, electro-charging rolls, and paper feed rolls; vibration-damping rubbers as in audio equipment; compact disk packing for use in computers, polymer insulators used with electric conductors, and rubber hoses and nipples for use in medical equipment.

### EXAMPLES

Examples and Comparative Examples are given below for illustrating the invention, but the invention is not limited thereto. In Examples, "parts" and "%" are by weight unless otherwise stated.

### [Example 1]

In a transparent glass vessel, 0.3311 part of tris(2,4-di-tert-butylphenyl) phosphite was weighed, and 9.6689 parts of n-hexane (b.p. 68°C) was added. After the vessel was closed, the contents were dissolved at room temperature (23°C) for about 1 hour. After it was confirmed by visual observation that crystals of tris(2,4-di-tert-butylphenyl) phosphite were dissolved, 10.0 parts of a silicone solution of platinum-1,3-divinyl-1,1,3,3-tetramethyldisiloxane complex containing 1 wt% of Pt (Karstedt complex) in both end vinyldimethylsiloxy-blocked dimethylpolysiloxane having a degree of polymerization of 180 as solvent was added. After the vessel was closed, the contents were stirred for 30 minutes until uniform. Thereafter, 0.0088 part of 1,3,5,7-tetravinyl-1,3,5,7-tetramethylcyclotetrasiloxane was added. After the vessel was closed, the contents were stirred for 60 minutes until uniform. The solution was then transferred to a 100-ml recovery flask, from which n-hexane was distilled off under reduced pressure (conditions: 30°C/2 hours/~35 hPa) by means of a rotary evaporator. In the 100-ml recovery flask, 10.33 g of a colorless transparent liquid was obtained (yield as catalyst solution (the same holds true, hereinafter): 99.9%). This silicone solution of platinum-phosphite ester complex-containing hydrosilation catalyst is designated Catalyst I.

(Notably, the amount of phosphite ester compound is 1.0 mole per mole of platinum atom in the platinum catalyst. The amount of organopolysiloxane compound containing adjacent alkenyl groups blended is 0.05 mole per mole of platinum atom in the platinum catalyst.)

### [Example 2]

In a transparent glass vessel, 0.3311 part of tris(2,4-di-tert-butylphenyl) phosphite was weighed, and 9.6689 parts of n-hexane was added. After the vessel was closed, the contents were dissolved at room temperature for about 1 hour. After it was confirmed by visual observation that crystals of tris(2,4-di-tert-butylphenyl) phosphite were dissolved, 10.0 parts of a silicone solution of platinum-1,3-divinyl-1,1,3,3-tetramethyldisiloxane complex containing 1 wt% of Pt (Karstedt complex) in both end vinyldimethylsiloxy-blocked dimethylpolysiloxane having a degree of polymerization of 180 as solvent was added. After the vessel was closed, the contents were stirred for 30 minutes until uniform. Thereafter, 0.1765 part of 1,3,5,7-tetravinyl-1,3,5,7-tetramethylcyclotetrasiloxane was added. After the vessel was closed, the contents were stirred for 60 minutes until uniform. The solution was then transferred to a 100-ml recovery flask, from which n-hexane was distilled off under reduced pressure (conditions: 30°C/2 hours/~32 hPa) by means of a rotary evaporator. In the 100-ml recovery flask, 10.46 g of a colorless transparent liquid was obtained (yield: 99.5%). This silicone solution of platinum-phosphite ester complex-containing hydrosilation catalyst is designated Catalyst II.

(Notably, the amount of phosphite ester compound is 1.0 mole per mole of platinum atom in the platinum catalyst. The amount of organopolysiloxane compound containing adjacent alkenyl groups blended is 1.0 mole per mole of platinum atom in the platinum catalyst.)

### [Example 3]

In a transparent glass vessel, 0.3311 part of tris(2,4-di-tert-butylphenyl) phosphite was weighed, and 9.6689 parts of n-hexane was added. After the vessel was closed, the contents were dissolved at room temperature for about 1 hour. After it was confirmed by visual observation that crystals of tris(2,4-di-tert-butylphenyl) phosphite were dissolved, 10.0 parts of a silicone solution of platinum-1,3-divinyl-1,1,3,3-tetramethyldisiloxane complex containing 1 wt% of Pt (Karstedt complex) in both end vinyldimethylsiloxy-blocked dimethylpolysiloxane having a degree of polymerization of 180 as solvent was added. After the vessel was closed, the contents were stirred for 30 minutes until uniform. Thereafter, 2.50 parts of 1,3,5,7-tetravinyl-1,3,5,7-tetramethylcyclotetrasiloxane was added. After the vessel was closed, the contents were stirred for 60 minutes until uniform. The solution was then transferred to a 100-ml recovery flask, from which n-hexane was distilled off under reduced pressure (conditions: 30°C/2 hours/~34 hPa) by means of a rotary evaporator. In the 100-ml recovery flask, 12.80 g of a colorless transparent liquid was obtained (yield: 99.8%). This silicone solution of platinum-phosphite ester complex-containing hydrosilation catalyst is designated Catalyst III.

(Notably, the amount of phosphite ester compound is 1.0 mole per mole of platinum atom in the platinum catalyst. The amount of organopolysiloxane compound containing adjacent alkenyl groups blended is 14.2 moles per mole of platinum atom in the platinum catalyst.)

### [Comparative Example 1]

The procedure was the same as in Example 1 except that 0.0088 part of 1,1,3,3,5,5,7,7-octamethylcyclotetrasiloxane was used instead of 1,3,5,7-tetravinyl-1,3,5,7-tetramethylcyclotetrasiloxane. As a result, 10.33 g of a colorless transparent liquid was obtained in the 100-ml recovery flask (yield: 99.9%). This silicone solution of platinum-phosphite ester complex-containing hydrosilation catalyst is designated Catalyst IV.

(Notably, the amount of phosphite ester compound is 1.0 mole per mole of platinum atom in the platinum catalyst. The amount of organopolysiloxane compound containing adjacent alkenyl groups blended is 0 mole per mole of platinum atom in the platinum catalyst.)

### [Comparative Example 2]

The procedure was the same as in Example 1 except that 1,3,5,7-tetravinyl-1,3,5,7-tetramethylcyclotetrasiloxane was omitted. As a result, 10.33 g of a colorless transparent liquid was obtained in the 100-ml recovery flask (yield: 99.9%). This silicone solution of platinum-phosphite ester complex-containing hydrosilation catalyst is designated Catalyst V.

(Notably, the amount of phosphite ester compound is 1.0 mole per mole of platinum atom in the platinum catalyst. The amount of organopolysiloxane compound containing adjacent alkenyl groups blended is 0 mole per mole of platinum atom in the platinum catalyst.)

### [Comparative Example 3]

In a transparent glass vessel, 0.3311 part of tris(2,4-di-tert-butylphenyl) phosphite was weighed, and 9.6689 parts of n-heptane (b.p. 98°C) was added. After the vessel was closed, the contents were dissolved at room temperature for about 1 hour. After it was confirmed by visual observation that crystals of tris(2,4-di-tert-butylphenyl) phosphite were dissolved, 10.0 parts of a silicone solution of platinum-1,3-divinyl-1,1,3,3-tetramethyldisiloxane complex containing 1 wt% of Pt (Karstedt complex) in a both end vinyldimethylsiloxy-blocked dimethylpolysiloxane having a degree of polymerization of 180 as solvent was added. After the vessel was closed, the contents were stirred for 30 minutes until uniform. Thereafter, 0.0088 part of 1,3,5,7-tetravinyl-1,3,5,7-tetramethylcyclotetrasiloxane was added. After the vessel was closed, the contents were stirred for 60 minutes until uniform. The solution was then transferred to a 100-ml recovery flask, from which n-hexane was distilled off under reduced pressure (conditions: 50°C/2 hours/~35 hPa) by means of a rotary evaporator. In the 100-ml recovery flask, a colorless transparent liquid having white crystals dispersed was obtained (amount 10.96 g, yield 106.0%), but a colorless transparent liquid free of crystal precipitates was not obtained. This silicone solution of platinum-phosphite ester complex-containing hydrosilation catalyst is designated Catalyst VI.

(Notably, the amount of phosphite ester compound is 1.0 mole per mole of platinum atom in the platinum catalyst. The amount of organopolysiloxane compound containing adjacent alkenyl groups blended is 0.05 mole per mole of platinum atom in the platinum catalyst.)

### [Comparative Example 4]

The procedure was the same as in Example 1 except that n-hexane was omitted. In the 100-ml recovery flask, 10.33 g of a colorless transparent liquid having white crystals dispersed was obtained (amount 10.33 g, yield 99.9%), but a colorless transparent liquid free of crystal precipitates was not obtained. This silicone solution of platinum-phosphite ester complex-containing hydrosilation catalyst is designated Catalyst VII.

(Notably, the amount of phosphite ester compound is 1.0 mole per mole of platinum atom in the platinum catalyst. The amount of organopolysiloxane compound containing adjacent alkenyl groups blended is 0.05 mole per mole of platinum atom in the platinum catalyst.)

### [Test]

The following test was carried out using the silicone solutions of platinum-phosphite ester complex-containing hydrosilation catalysts obtained in Examples 1 to 3 and Comparative Examples 1 to 4, Catalysts I to VII. The test results are shown in Table 1 together with the amount and yield.

### [Outer appearance]

Each platinum-phosphite ester complex-containing hydrosilation catalyst was stored in a nitrogen-filled closed vessel. The outer appearance of the catalyst was observed immediately after preparation (23°C), and after 3 days and 3 months of storage at 23°C. A sample with no crystals formed in the vessel was rated "Pass" whereas a sample with crystals formed in the vessel was rated "Reject."

**[Table 1]**

| | Example 1 | Example 2 | Example 3 | Comparative Example 1 | Comparative Example 2 | Comparative Example 3 | Comparative Example 4 |
|---|---|---|---|---|---|---|---|
| Amount (g) | 10.33 | 10.46 | 12.80 | 10.33 | 10.33 | 10.96 | 10.33 |
| Yield (%) | 99.9 | 99.5 | 99.8 | 99.9 | 99.9 | 106.0 | 99.9 |
| Appearance (as prepared, 23°C) | colorless transparent liquid | colorless transparent liquid | colorless transparent liquid | colorless transparent liquid | colorless transparent liquid | crystal precipitates | crystal precipitates |
| Appearance (after 23°C/3 days) | colorless transparent liquid | colorless transparent liquid | colorless transparent liquid | colorless transparent liquid | colorless transparent liquid | crystal precipitates | crystal precipitates |
| Appearance (after 23°C/3 months) | colorless transparent liquid | colorless transparent liquid | colorless transparent liquid | crystal precipitates | crystal precipitates | crystal precipitates | crystal precipitates |
| Judgment | Pass | Pass | Pass | Reject | Reject | Reject | Reject |

### [Evaluation]

The platinum-phosphite ester complex-containing hydrosilation catalysts obtained in Examples 1 to 3 fall in the scope of the invention. In all Examples 1 to 3, the amount of phosphite ester compound blended is 1.0 mole per mole of platinum atom in the platinum catalyst. The platinum-phosphite ester complex-containing hydrosilation catalysts obtained in Examples 1 to 3 were retarded from crystal precipitation after 23°C/3 months storage under the closed conditions, indicating that platinum-phosphite ester complex-containing hydrosilation catalysts having high state stability were obtained.

When platinum-phosphite ester complex-containing hydrosilation catalysts were prepared by the same procedure as in Example 1 except that the amount of phosphite ester compound blended was changed from 1.0 mole to 1.9 moles at intervals of 0.1 mole per mole of platinum in the platinum catalyst, colorless transparent liquids at 23°C were obtained in all runs. It was confirmed that the liquids remained colorless transparent after 3 months of storage at 23°C.

In contrast, the platinum-phosphite ester complex-containing hydrosilation catalysts of Comparative Examples 1 and 2 wherein the organopolysiloxane compound comprising units of formula (2) (i.e., organopolysiloxane compounds having adjacent alkenyl groups) was not added was a colorless transparent liquid at the initial stage of preparation, but allowed crystals to precipitate out with the lapse of time for lack of long-term state stability. The platinum-phosphite ester complex-containing hydrosilation catalyst of Comparative Example 3 wherein n-heptane having a boiling point in excess of 80°C was used as the hydrocarbon-based organic solvent for dissolving the phosphite ester compound demonstrated that the n-heptane could not be completely distilled off even when the vacuum distillation temperature was set higher, and as a result of elevating the heating temperature, the coordination of the phosphite ester compound in the platinum-phosphite ester complex-containing hydrosilation catalyst was broken, allowing crystals to precipitate out. A platinum-phosphite ester complex-containing hydrosilation catalyst in liquid state could not be obtained. The platinum-phosphite ester complex-containing hydrosilation catalyst of Comparative Example 4 wherein the phosphite ester compound was coordinated with the platinum catalyst without dissolving in the hydrocarbon-based organic solvent demonstrated that a liquid having crystals dispersed therein was obtained because the phosphite ester compound was not dissolved.

The above results reveal that a platinum-phosphite ester complex-containing hydrosilation catalyst in a stable liquid state is obtained according to the invention.

### [Examples of curable organopolysiloxane composition comprising platinum-phosphite ester complex-containing hydrosilation catalyst]

In order to demonstrate the advantages of the platinum-phosphite ester complex-containing hydrosilation catalyst of the invention, examples of the curable organopolysiloxane composition using the inventive catalyst (after 3 months of storage at 23°C in closed conditions) are described below as well as Comparative Examples. Although examples and comparative examples refer to one-pack millable type curable organopolysiloxane compositions, the invention is not limited thereto.

### [Composition Example 1]

A base compound (1) was prepared by adding 100 parts by weight of dimethylpolysiloxane gum consisting of 99.85 mol% of dimethylsiloxane units, 0.125 mol% of methylvinylsiloxane units and 0.025 mol% of dimethylvinylsiloxy units and having an average degree of polymerization of 6,000, 55 parts by weight of fumed silica having a BET specific surface area of 200 m²/g (Aerosil 200 by Nippon Aerosil Co., Ltd.), 12 parts by weight of dimethyldimethoxysilane (surface treating agent), 0.2 part by weight of vinyltrimethoxysilane (surface treating agent), 12 parts by weight of dimethylpolysiloxane having silanol groups at both ends, an average degree of polymerization of 4, and a viscosity of 15 mPa·s at 23°C (dispersant), and 0.15 part by weight of 3 wt% potassium siliconate, and mixing the contents on a kneader for 2 hours while heating at 170°C.

A gum-like one-pack millable type curable organopolysiloxane composition I was prepared by adding 1.7 parts by weight of organohydrogensiloxane having the formula shown below (SiH content 0.00726 mol/g), 0.05 part by weight of Catalyst I in Example 1, and 0.00080 part by weight of ethynyl methyl decyl carbinol (addition reaction inhibitor) to base compound (1), the amounts being per 100 parts by weight of the dimethylpolysiloxane gum, and uniformly mixing the contents on a twin roll mill.

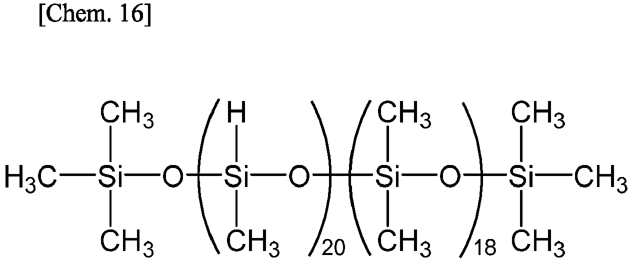

### [Composition Example 2]

A one-pack millable type curable organopolysiloxane composition II was prepared by the same procedure as in Composition Example 1 except that 0.05 part by weight of Catalyst II prepared in Example 2 was used instead of Catalyst I.

### [Composition Example 3]

A one-pack millable type curable organopolysiloxane composition III was prepared by the same procedure as in Composition Example 1 except that 0.05 part by weight of Catalyst III prepared in Example 3 was used instead of Catalyst I.

### [Composition Comparative Example 1]

A one-pack millable type curable organopolysiloxane composition IV was prepared by the same procedure as in Composition Example 1 except that 0.05 part by weight of Catalyst IV prepared in Comparative Example 1 was used instead of Catalyst I.

### [Composition Comparative Example 2]

A one-pack millable type curable organopolysiloxane composition V was prepared by the same procedure as in Composition Example 1 except that 0.05 part by weight of Catalyst V prepared in Comparative Example 2 was used instead of Catalyst I.

### [Composition Comparative Example 3]

A one-pack millable type curable organopolysiloxane composition VI was prepared by the same procedure as in Composition Example 1 except that 0.05 part by weight of Catalyst VI prepared in Comparative Example 3 was used instead of Catalyst I.

### [Composition Comparative Example 4]

A one-pack millable type curable organopolysiloxane composition VII was prepared by the same procedure as in Composition Example 1 except that 0.05 part by weight of Catalyst VII prepared in Comparative Example 4 was used instead of Catalyst I.

### [Composition Comparative Example 5]

A one-pack millable type curable organopolysiloxane composition VIII was prepared by the same procedure as in Composition Example 1 except that 0.05 part by weight of a solution of platinum-1,3-divinyl-1,1,3,3-tetramethyldisiloxane complex containing 1 wt% of Pt (Karstedt complex) in both end vinyldimethylsiloxy-blocked dimethylpolysiloxane having a degree of polymerization of 180 as solvent was used instead of Catalyst I.

### [Test]

Using the one-pack millable type curable organopolysiloxane compositions obtained in Composition Examples 1 to 3 and Composition Comparative Examples 1 to 5, the following test was carried out. The results are shown in Table 2 together with the results of judging the outer appearance of the catalysts.

### [Working efficiency during preparation of one-pack millable type curable organopolysiloxane composition (Working efficiency upon catalyst addition)]

In preparing the one-pack millable type curable organopolysiloxane compositions in Composition Examples 1 to 3 and Composition Comparative Examples 1 to 5, a sample was judged "Pass" when the state of the platinum-phosphite ester complex-containing hydrosilation catalyst was liquid at 23°C, and no troubles developed during addition, and "Reject" when the platinum-phosphite ester complex-containing hydrosilation catalyst had crystallized and working troubles developed during addition.

### [Storage stability of one-pack millable type curable organopolysiloxane composition]

The one-pack millable type curable organopolysiloxane compositions in Composition Examples 1 to 3 and Composition Comparative Examples 1 to 5 were examined for storage stability (or curability after storage). The initial curability and the curability after 6 months of storage at 23°C of the one-pack millable type curable organopolysiloxane composition were compared by using a rheometer (Rubber Process Analyzer RPA2000 by Alpha Technologies), measuring the cured torque of the one-pack millable type curable organopolysiloxane composition at a temperature of 150°C with the lapse of time, and determining a time (T50) taken from the start of measurement to a torque value of 50% of the maximum torque. A sample was judged "Pass" when it could be evaluated until 6 months of storage at 23°C.

**[Table 2]**

| | Composition Example 1 | Composition Example 2 | Composition Example 3 | Composition Comparative Example 1 | Composition Comparative Example 2 | Composition Comparative Example 3 | Composition Comparative Example 4 | Composition Comparative Example 5 |
|---|---|---|---|---|---|---|---|---|
| Judgment of outer appearance of catalyst | Pass | Pass | Pass | Reject | Reject | Reject | Reject | - |
| Working efficiency upon catalyst addition | Pass | Pass | Pass | Reject | Reject | Reject | Reject | Pass |
| Initial T50* (min) | 0.56 | 0.58 | 0.60 | 0.56 | 0.57 | 0.54 | 0.40 | 0.37 |
| T50** after 23°C /6 month storage (min) | 0.49 | 0.52 | 0.55 | 0.49 | 0.50 | 0.44 | Unmeasurable | Unmeasurable |
| T50** - T50* | -0.07 | -0.06 | -0.05 | -0.07 | -0.07 | -0.10 | Uncalculatable | Uncalculatable |
| Judgment of composition | Pass | Pass | Pass | Pass | Pass | Pass | Reject | Reject |

### [Evaluation of composition]

It was demonstrated that the platinum-phosphite ester complex-containing hydrosilation catalysts obtained in Examples 1 to 3 meet the requirements of the invention, and the one-pack millable type curable organopolysiloxane compositions of Composition Examples 1 to 3 using these catalysts show acceptable working efficiency upon catalyst addition and effective cure because of curing at 150°C for 10 minutes. They also show satisfactory storage stability at 23°C (or curability after storage).

In contrast, the platinum-phosphite ester complex-containing hydrosilation catalysts of Comparative Examples 1 to 3 were judged "Reject" in terms of outer appearance of the catalyst itself because crystals had precipitated immediately after preparation at 23°C or after 3 months at 23°C. They were also judged "Reject" in terms of working efficiency because the precipitated crystals (solids) should be removed when the catalyst was added to the composition, and a necessary amount of only the liquid fraction of the platinum-phosphite ester complex-containing hydrosilation catalyst should be blended. Notably, the one-pack millable type curable organopolysiloxane compositions of Composition Comparative Examples 1 to 3 using these catalysts (only liquid fraction) showed satisfactory storage stability (or curability after storage).

Since the platinum-phosphite ester complex-containing hydrosilation catalyst of Comparative Example 4 was prepared without using the hydrocarbon-based organic solvent so that formation of a complex between the phosphite ester compound and platinum was insufficient, the one-pack millable type curable organopolysiloxane composition of Composition Comparative Example 4 using that catalyst was judged "Reject" in terms of working efficiency upon catalyst addition and invited a loss of storage stability (or curability after storage).

Composition Comparative Example 5 is exemplary of the one-pack millable type curable organopolysiloxane composition directly using the platinum catalyst (Karstedt complex) itself which is prepared without complex formation with a phosphite ester and association with a siloxane compound, selected from one or more platinum-alkenyl-containing siloxane complexes formed from platinum chloride, chloroplatinic acid, and chloroplatinic acid or chloroplatinic acid salt, and an alkenyl-containing siloxane, and free of hydrocarbon-based organic solvents. The one-pack millable type curable organopolysiloxane composition prepared using this catalyst showed satisfactory working efficiency upon catalyst addition, but a loss of storage stability (or curability after storage).

It is evident from the above results that the one-pack millable type curable organopolysiloxane composition using the platinum-phosphite ester complex-containing hydrosilation catalyst prepared according to the invention displays excellent performance in terms of working efficiency and storage stability.

### INDUSTRIAL APPLICABILITY

The platinum-phosphite ester complex-containing hydrosilation catalyst of the invention maintains a liquid state at 23°C in the absence of hydrocarbon-based organic solvents even though it belongs to the group of conventional platinum-phosphite ester complex-containing hydrosilation catalysts which are inevitably followed by crystal formation. The hydrosilation catalyst itself is improved in state stability. When a curable organopolysiloxane composition is prepared using the catalyst, working efficiency is high. The curable organopolysiloxane composition is fully safe because no hydrocarbon-based organic solvents are contained. It gives no or little harm to the human body. The curable organopolysiloxane composition free of hydrocarbon-based organic solvents is stable in state and physical properties even when exposed at normal temperature for a long time and expected to find a variety of use in electric equipment, vehicle, building, medical and food fields.

## Claims

1. A platinum-phosphite ester complex-containing hydrosilation catalyst comprising
a platinum-phosphite ester complex composed of platinum and a phosphite ester compound having the general formula (1): 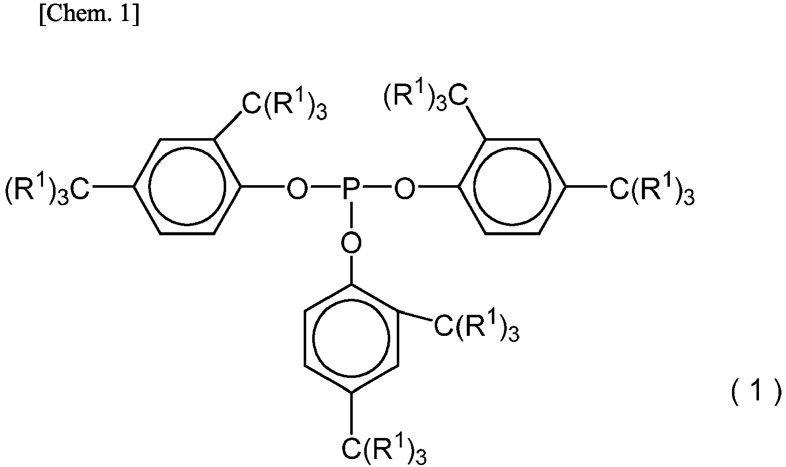 wherein R¹ is independently hydrogen or a C₁-C₃ monovalent aliphatic hydrocarbon group, and
a liquid alkenyl-containing siloxane compound containing an organopolysiloxane compound comprising units having the general formula (2): 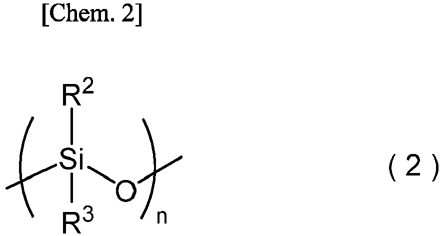 wherein R² is a C₂-C₁₀ alkenyl group, R³ is a C₁-C₁₀ monovalent aliphatic hydrocarbon group, and n is an integer of 2 to 200,
the catalyst being free of hydrocarbon-based organic solvents and being liquid at 23°C.

2. The hydrosilation catalyst of claim 1 wherein the organopolysiloxane compound comprising units of formula (2) is a cyclic organopolysiloxane compound.

3. The hydrosilation catalyst of claim 1 or 2 wherein at least part of the platinum-phosphite ester complex is associated with the organopolysiloxane compound comprising units of formula (2).

4. The hydrosilation catalyst of claim 3 wherein 0.01 to 100 mol% of the platinum-phosphite ester complex is associated with the organopolysiloxane compound comprising units of formula (2).

5. The hydrosilation catalyst of any one of claims 1 to 4 wherein the alkenyl-containing siloxane compound further contains 1,3-divinyl-1,1,3,3-tetramethyldisiloxane and/or 1, 5-divinyl-1,1, 3 , 3, 5, 5-hexamethyltrisiloxane.

6. A curable organopolysiloxane composition comprising the platinum-phosphite ester complex-containing hydrosilation catalyst of any one of claims 1 to 5.

7. The curable organopolysiloxane composition of claim 6 which is free of hydrocarbon-based organic solvents.

8. An article comprising a cured product of the curable organopolysiloxane composition of claim 6 or 7.

9. A method for preparing a platinum-phosphite ester complex-containing hydrosilation catalyst comprising the steps (a) to (d):
(a) dissolving a phosphite ester compound having the general formula (1): 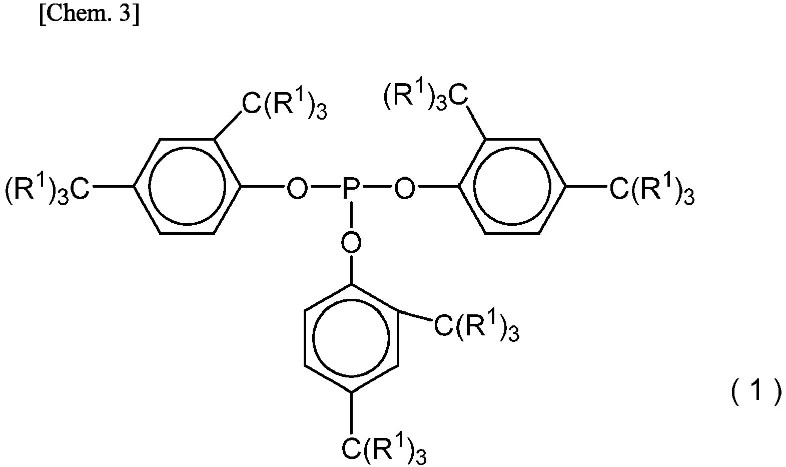 wherein R¹ is independently hydrogen or a C₁-C₃ monovalent aliphatic hydrocarbon group, in a hydrocarbon-based organic solvent having a boiling point of up to 80°C to form a solution,
(b) adding a platinum catalyst to the solution, the platinum catalyst being selected from one or more platinum-alkenyl-containing siloxane complexes formed from platinum chloride, chloroplatinic acid, and chloroplatinic acid or chloroplatinic acid salt, and an alkenyl-containing siloxane, and being free of hydrocarbon-based organic solvents, dispersing and dissolving the platinum catalyst and the solution to form a solution containing a platinum-phosphite ester complex composed of platinum and the phosphite ester compound having formula (1),
(c) adding an organopolysiloxane compound comprising units having the general formula (2): 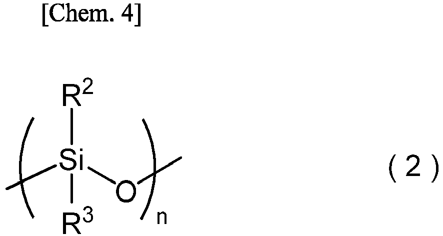 wherein R² is a C₂-C₁₀ alkenyl group, R³ is a C₁-C₁₀ monovalent aliphatic hydrocarbon group, and n is an integer of 2 to 200, to the solution of step (b), dispersing and dissolving the organopolysiloxane compound and the solution to form a solution containing an associated compound of at least part of the platinum-phosphite ester complex with the organopolysiloxane compound comprising units of formula (2), and
(d) removing the hydrocarbon-based organic solvent from the solution of step (c).

10. A method for preparing a platinum-phosphite ester complex-containing hydrosilation catalyst according to claim 9 wherein 0.01 to 500 moles of the organopolysiloxane compound comprising units of formula (2) is added per mole of platinum atom in the platinum-phosphite ester complex.

11. A method for retarding a platinum-phosphite ester complex-containing hydrosilation catalyst from crystallization, the method comprising the steps (a) to (d):
(a) dissolving a phosphite ester compound having the general formula (1): 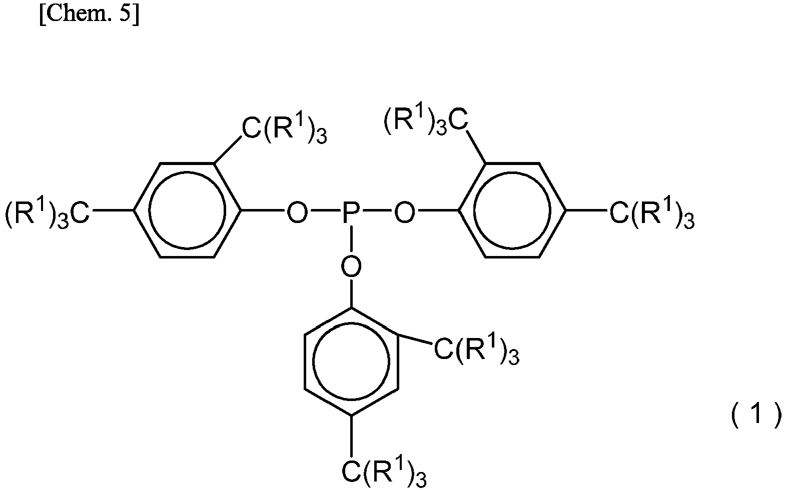 wherein R¹ is independently hydrogen or a C₁-C₃ monovalent aliphatic hydrocarbon group, in a hydrocarbon-based organic solvent having a boiling point of up to 80°C to form a solution,
(b) adding a platinum catalyst to the solution, the platinum catalyst being selected from one or more platinum-alkenyl-containing siloxane complexes formed from platinum chloride, chloroplatinic acid, and chloroplatinic acid or chloroplatinic acid salt, and an alkenyl-containing siloxane, and being free of hydrocarbon-based organic solvents, dispersing and dissolving the platinum catalyst and the solution to form a solution containing a platinum-phosphite ester complex composed of platinum and the phosphite ester compound having formula (1),
(c) adding an organopolysiloxane compound comprising units having the general formula (2): 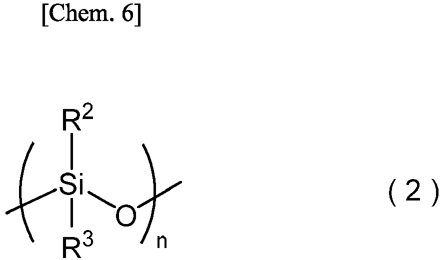 wherein R² is a C₂-C₁₀ alkenyl group, R³ is a C₁-C₁₀ monovalent aliphatic hydrocarbon group, and n is an integer of 2 to 200, to the solution of step (b), dispersing and dissolving the organopolysiloxane compound and the solution to form a solution containing an associated compound of at least part of the platinum-phosphite ester complex with the organopolysiloxane compound comprising units of formula (2), and
(d) removing the hydrocarbon-based organic solvent from the solution of step (c).

12. A method for retarding a platinum-phosphite ester complex-containing hydrosilation catalyst from crystallization according to claim 11 wherein 0.01 to 500 moles of the organopolysiloxane compound comprising units of formula (2) is added per mole of platinum atom in the platinum-phosphite ester complex.
